# EUROPEAN PATENT SPECIFICATION

(11) **EP 1 162 089 B1**
(45) Date of publication and mention of the grant of the patent: **25.01.2006**
(21) Application number: 01113768.4
(22) Date of filing: 05.06.2001
(51) Int. Cl.: B60C 23/04, B60B 21/02, B60B 21/04, B60B 21/10

(54) **Vehicle tire air pressure detecting device and cast wheel for mounting the device**
Vorrichtung zur Fahrzeugreifendruckerkennung und gegossenes Rad für seine Montage
Appareil de détection de la pression de pneumatiques de véhicule et roue moulée pour son montage

(30) Priority: 06.06.2000 JP 2000169342
(43) Date of publication of application: 12.12.2001
(73) Proprietor: HONDA GIKEN KOGYO KABUSHIKI KAISHA, Minato-ku, Tokyo (JP)
(72) Inventor: Bunya, Osamu, 4-1, Chuo 1-chome, Wako-shi, Saitama (JP); Yamagiwa, Toshio, 4-1, Chuo 1-chome, Wako-shi, Saitama (JP); Harada, Tomoyuki, 4-1, Chuo 1-chome, Wako-shi, Saitama (JP)
(74) Representative: Liska, Horst

(56) References cited:
- DE-A- 3 640 468
- DE-A- 3 930 095
- DE-A- 19 529 289
- DE-A- 19 626 446
- GB-A- 349 641
- US-A- 4 235 184
- US-A- 5 844 131

## Description

The present invention relates to a vehicular cast wheel according to the preamble part of claim 1.

As an on vehicle tire air pressure detecting device for detecting whether an air pressure of a vehicular tire is lowered or not, for example, Japanese Unexamined Patent Publication H10-44726 "Tire air pressure warning device" is well known. In Fig. 1 of the patent publication described above, a state mounted with the tire air pressure warning device constituted of a transmission section 7 and a valve stem 10 on a wheel rim 1 by a nut 9 is disclosed.

In an art of the patent publication described above, in a case where a case 2 of a tire air pressure warning device is projected on a side of a tire, it is considered that when assembling a tire on a wheel rim 1, bead sections of the tire are interfered with the case 2.

Document DE 196 26 446 A1 discloses a generic vehicular cast wheel having a tire air pressure sensor, which is fixed by clamp means in two recesses of a rim. The recesses are formed in passages between tire seat sections and a bed section of the rim.

Thus, an object of the present invention is to prevent bead sections of a tire from interfering with an on vehicle tire air pressure detecting device when assembling the tire on a cast wheel, or removing the tire from the cast wheel.

The object described above is achieved by a vehicular cast wheel according to claim 1.

By accommodating the air pressure sensor in the recessed section of the rim, when the tire is assembled on the cast wheel by utilizing a tire changer or the like or the tire is removed from the cast wheel, the bead sections of the tire are prevented from interfering with the air pressure sensor, and the damaging of air pressure sensor is prevented.

Claim 2 is characterized in that the air pressure sensor is formed in a shape of a curve along an inner side surface of the rim.

By constituting the air pressure sensor in the shape of the curve along the inner side surface of the rim, and by eliminating a projecting section of the air pressure sensor to the tire side, when the tire is assembled on the cast wheel, or is removed from the cast wheel, the bead sections of the tire are prevented from interfering with the air pressure sensor, and damaging of the air pressure sensor is prevented.

Claim 3 is characterized by a weight section for being easily balanced with the air pressure sensor at a position shifted at an angle of 180° to a peripheral direction from a position where the air pressure sensor is mounted on the rim, where in the weight section is integrally molded with the rim.

By being integrally molded a weight section with the rim, a cast wheel is easily in balance, a necessity to mount or to affix specific weight to the cast wheel in an attempt to be in a good wheel balance is eliminated, and workability is improved.

An embodiment of the present invention will be explained hereinafter on the basis of the attached drawings. In the meantime, the drawings are to be viewed in a direction whereto numerals are written.
Fig. 1 is a side elevation view of a motorcycle being provided with an on vehicle tire air pressure detecting device relating to the present invention,
Fig. 2 is a first sectional view of a mounting state of a tire air pressure detecting device in an air pressure detecting device relating to the present invention,
Fig. 3 is a second sectional view of a mounting state of a tire air pressure detecting device in an air pressure detecting device relating to the present invention,
Fig. 4 is a view explaining a wheel mounted with a tire air pressure detecting device relating to the present invention.

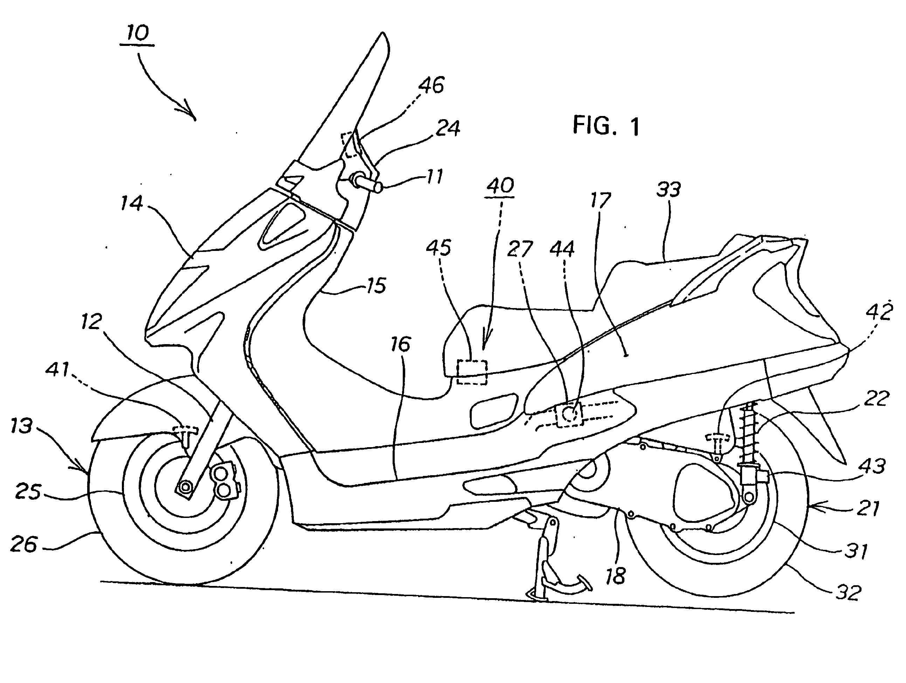

Fig. 1 shows a side elevation view of a motorcycle provided with an on vehicle tire air pressure detecting device relating to the present invention, a motorcycle 10 as a vehicle is constituted of a handlebar 11, a front fork 12 and a front wheel 13 mounted freely steerably on a lower section of the handlebar 11, a front cover 14 and a front inner cover 15 for covering a lower section of the handlebar 11 and an upper section of the front fork 12, a floor step 16 arranged in a rearward of a lower section of the front cover 14, a body cover 17 continued upward at a rear section of the floor step 16, a power unit 18 extending to a rearward from an inner side of the body cover 17, a rear wheel 21 mounted to a rearward of the power unit 18, and an air suspension device 22 respectively suspended between a rear end section of the power unit 18 and a vehicular body frame, not illustrated, inside the body cover 17.

Here, numeral 24 denotes a meter cover mounted on a handlebar 11, numerals 25 and 26 denote a wheel and a tire of the front wheel 13, numeral 27 denotes a carburetor for supplying fuel to an engine constituting the power unit 18, numerals 31 and 32 denote a wheel and a tire of the rear wheel 21, and numeral 33 denotes a seat.

An on vehicle tire air pressure detecting device 40 (hereinafter referred to as "air pressure detecting device 40") of the present invention, is constituted of a tire air pressure detecting device 41 as an air pressure sensor for a front wheel for detecting an air pressure of the tire 26 by mounting the device 41 on the wheel 25 of the front wheel 13, a tire air pressure detecting device 42 as an air pressure sensor for a rear wheel for detecting an air pressure of the tire 32 by mounting the device 42 on the wheel 31 of the rear wheel 21, an air suspension air pressure detecting device 43 mounted on the air suspension device 22, for example, an engine output adjusting device 44 for adjusting an opening degree of a throttle by mounting the device 44 on a carburetor 27, a control device 45 by operating a warning device, not illustrated, by receiving a signal transmitted from the tire air pressure detecting devices 41 and 42, and the air suspension air pressure detecting device 43, and controlling the engine output adjusting device 44, a display device 46 for displaying the air pressure of the tire 26 of the front wheel 13, the air pressure of the tire 32 of the rear wheel 21, and the air pressure of the air suspension device 22 by receiving signal from the control device 45, and the warning device.

The control device 45, for example, is arranged downward the seat 33 and the display device 46, for example, is mounted on a meter cover 24.

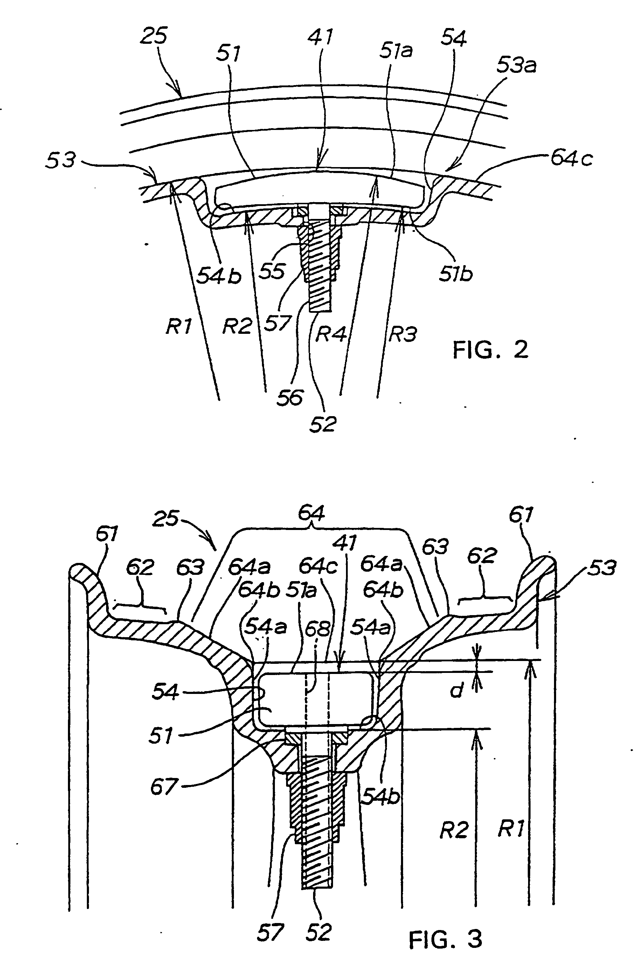

Fig. 2 shows a first sectional view illustrating a mounting state of a tire air pressure detecting device 41 in an air pressure detecting device relating to the present invention, and with regard to the tire air pressure detecting device 41 for the front wheel will be explained. With regard to a tire air pressure detecting device 42 for the rear wheel, since the structure is the same as the tire air pressure detecting device 41 for the front wheel, the explanation in Fig. 2 and afterward will be abbreviated.

The tire air pressure detecting device 41 is constituted of a detecting device main body 51, and a tire valve 52 mounted on the detecting device main body 51 for the purpose of opening only when supplying air to inside the tire 26 (refer to Fig. 1), and for the purpose of being closed so as not air supplied to inside the tire 26 being flowed out to an outer section, the detecting device main body 51 is arranged on a recessed section 54 provided on a bottom of a rim 53, the tire valve 52 is inserted into a valve inserting hole 55 opened on the bottom of the rim 53, a nut 57 is threaded into an external thread section 56 provided on an outer peripheral surface of the tire valve 52, and the tire air pressure detecting device 41 is mounted on the wheel 25.

Fig. 3 shows a second sectional view illustrating the mounting state of the tire air pressure detecting device in the air pressure detecting device relating to the present invention.

The wheel 25 is constituted of flange sections 61, bead seat sections 62 provided on inner sides of these flange sections 61, hump sections 63 protuberantly molded on an inner side of the these bead seat sections 62, a rim drop section 64 dented between respective these hump sections 63, and the recessed section 54 described above provided in this rim drop section 64.

The bead seat section 62 is a portion holding a bead section of the tire 26 (refer to Fig. 1).

The hump section 63 is a projecting section in a shape of a ring for preventing the tire 26 from coming off from the bead seat section 62 of the wheel 25.

The rim drop section 64 is a portion for facilitating attachment /detachment of the tire 26 by deeply dropping the section 64.

The tire air pressure detecting device 41 is a device mounted on an outer surface 51a of the detection device main body 51 on the rim 53 being an inner side by only an amount d from a bottom surface (described later) of the rim drop section 64. In the meantime, numeral 67 denotes a seal member for preventing air from leaking to an outer section from an air chamber inside the tire 26, numeral 68 denotes a communicating hole (blocked by valve element not illustrated) provided inside a tire valve 52 for communicating an inside /outside of the tire 26.

By accommodating the detecting device main body 51 in the recessed section 54 of the rim 53, when assembling the tire 26 on the wheel 25 by utilizing the tire changer or the like, or removing the tire 26 from the wheel 25, the bead sections of the tire 26 are possible to be prevented from interfering with the detecting device main body 51, and the damaging of detecting device main body 51 is prevented.

Here, by constituting a surface, connected intersection positions. 64b formed by intersecting side surfaces 54a of the recessed section 54 and the slant surfaces 64a and 64a of the rim drop section 64, to each other in a peripheral direction and in a width direction, as a bottom surface 64c of the rim drop section 64, a distance (radius) from the center of the wheel 25 to the bottom surface 64c is set as R1, a distance (radius) from the center of the wheel 25 of the bottom surface 54b of the recessed section 54 is set as R2.

Returning to Fig. 2, the detecting device main body 51 is a body formed in a shape of a curve along an inner side surface 53a (that is, a total surfaces added a bottom surface 64c of the rim drop section 64 to a bottom surface 54b of the recessed section 54) of the rim 53.

When a radius of an inner surface 51b of the detection device main body 51 is set as R3, and a radius of an outer surface 51a thereof is set as R4, a relationship described hereinafter is satisfied.
① R⁴ ≦ R1, ② R2 ≦ R3, ③ R4 ≦ R3

For example, in a case where a tire air pressure detecting device 41 is commonly utilized and mounted on the wheel with a rim diameter having 10 inch - 19 inch size, (1) the radius R4 of the outer surface 51a of the detecting device main body 51 is set smaller than the radius R1 of the bottom surface 64c of the rim drop section 64 (refer to Fig. 3) of the wheel of 10 inch size of the minimum diameter, even if a tire air pressure detecting mean 41 is mounted on any wheels of 10 inch - 19 inch size, on an outer surface 51a of the detecting device main body 51 is not protruded on outside from the bottom surface 64c of the rim drop section 64. That is, a relationship of R4 ≦ R1 is satisfied.

(2) By setting the radius R3 of an inner surface 51b of the detecting device main body 51 is larger than the radius R2 of the bottom surface 54b of the recessed section 54 of the wheel for the maximum diameter 19 inch size, even if the tire air pressure detecting mean 41 is mounted on any wheels of 10 inch - 19 inch size, the inner surface 51b of the detecting device main body 51 is not interfered with the bottom surface 54b of the recessed section 54. That is, a relationship of R2 ≦ R3 is satisfied.

(3) When R1 (dimension for wheel of 10 inch size) ≦ R2 (dimension for wheel of 19 inch size) is established, from the relationships (1) and (2) described above, since R4 ≦ R1 ≦ R2 ≦ R3 is established, a relationship R4 ≦ R3 is satisfied.

As explained in Fig. 2 described above the detecting device main body 51 is a body contrived in a shape of a curve along the inner side surface 53a of the rim 53.

By contriving the detecting device main body 51 in a shape of a curve along the inner side surface 53a of the rim 53, a projecting section to a tire 26 (refer to Fig. 1) side of the detecting device main body 51 can be eliminated, and when the tire 26 is assembled on the wheel 25 or the tire 26 is removed from the wheel 25, the bead sections of the tire 26 is prevented from interfering with the detecting device main body 51 and damaging of the detecting device main body 51 is prevented.

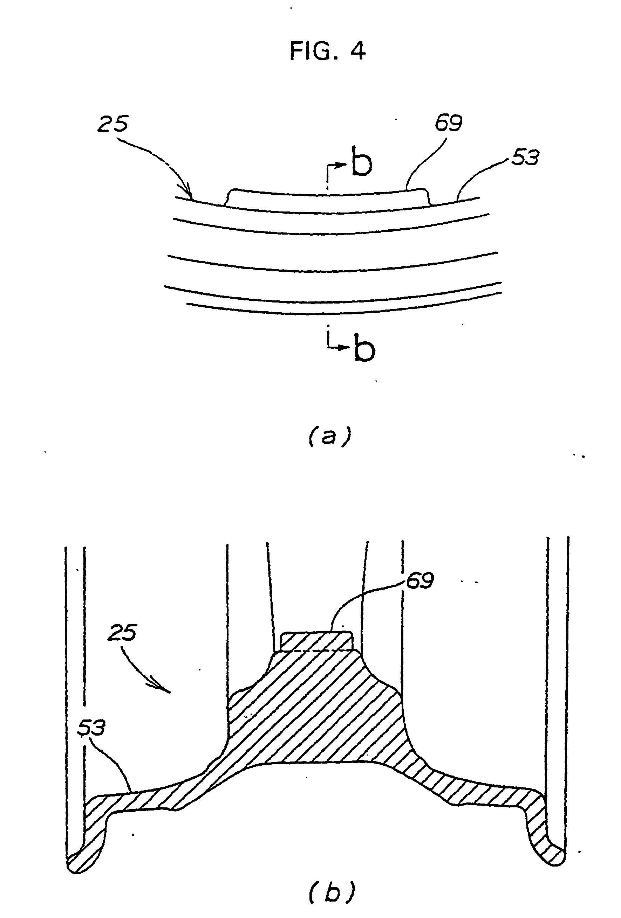

Fig. 4 (a) and Fig. 4 (b) show a view explaining a wheel mounted with the tire air pressure detecting device relating to the present invention, Fig. 4 (a) shows a side elevation view, and Fig. 4 (b) shows a sectional view taken on line b - b.

In Fig. 4 (a), the wheel 25 is contrived to be integrally molded a weight section 69 for being balanced with the tire air pressure detecting device 41 with the rim 53 at a position shifted at an angle of 180° in a peripheral direction from a position mounted with the tire air pressure detecting device 41 (refer to Fig. 3) on the rim 53, that is, from the recessed section 54 (refer to Fig. 3).

Fig. 4 (b) illustrates the weight section 69 provided by being projected on a wheel center side of the rim 53.

As explained hereinbefore, the weight section 69 for being balanced with the tire air pressure detecting device 41 is integrally molded with the rim 53 at the position shifted an angle of 180° in a peripheral direction from the position mounted with the tire air pressure detecting device 41 on the rim 53.

By being integrally molded the weight section 69 with the rim 53, a necessity to mount or to affix specific weight in an attempt to be in a good wheel balance is eliminated, workability is improved.

In the meantime, the tire air pressure detecting device 41 for the front wheel and the tire air pressure detecting device 42 for the rear wheel explained in an embodiment of the present invention may well be the same dimension with each other or may be differed from each other according to the size of the tire.

Further, the tire air pressure detecting device 40 can be applied to not necessarily the motorcycle, but to a three-wheeled vehicle or to a four-wheeled vehicle.

The present invention exhibits the following effects according to the constitution above.

When a tire is assembled to a cast wheel by utilizing a tire changer or the like or when the tire is removed from the cast wheel, the bead sections of the tire are capable of being prevented from interfering with the air pressure sensor, and damaging of the air pressure sensor is prevented.

In the vehicular cast wheel in claim 2, since an air pressure sensor is formed in a shape of a curve along an inner side surface of a rim, a projecting section to a tire side of the air pressure sensor can be eliminated, when the tire is assembled to a cast wheel, or when the tire is removed from the cast wheel, the bead sections of the tire are prevented from interfering with the air pressure sensor, and damaging of the air pressure sensor is prevented.

In the wheel for mounting an on vehicle tire air pressure detecting device in claim 3, since a weight section is integrally molded with the rim for being balanced with an air pressure sensor at a position shifted at an angle of 180° in a peripheral direction from a position where the air pressure sensor is mounted on a rim, a cast wheel can be easily in balance, a necessity to mount or to affix specific weight in an attempt to be in a good wheel balance is eliminated, workability is improved.

In summary, a rim drop section 64 dented in a shape of a ring is provided on an inner side of a bead seat section 62 of a rim 53 for holding a bead section of a tire, further, a recessed section 54 is provided on this rim drop section 64, and to this recessed section 54 a detecting device main body 51 of a tire air pressure detecting device 41 is accommodated.

When a tire is assembled on a cast wheel by utilizing a tire changer or the like, or when the tire is removed from the cast wheel, the bead sections of the tire are prevented from interfering with an air pressure sensor, and damaging of the air pressure sensor is prevented.

## Claims

1. A vehicular cast wheel comprising an air pressure sensor (41, 42) of an on vehicle tire air pressure detecting device (40), the air pressure sensor (41, 42) being mounted on a rim (53) of the wheel (25, 31), wherein a rim drop section (64) dented in a shape of a ring and having a bottom surface (64c) is provided on an inner side of bead seat sections (62) of the rim (53) for holding bead sections of the tire (26, 32), and wherein the rim drop section (64) is provided with a recessed section (54), and the air pressure sensor (41, 42) is accommodated in the recessed section (54),
**characterized in that**
the recessed section (54) is provided in the bottom surface (64c) and is recessed in a width and peripheral direction, so as to prevent the bead sections of the tire (26, 32) from interfering with the air pressure sensor (41, 42).

2. The vehicular cast wheel according to claim 1, **characterized in that** the air pressure sensor (41, 42) is formed in a shape of a curve along an inner side surface (53a) of the rim (53).

3. The vehicular cast wheel according to claim 1 or claim 2, **characterized by** a weight section (69) for being balanced with the air pressure sensor (41, 42) at a position shifted at an angle of 180° to a peripheral direction from a position where the air pressure sensor (41, 42) is mounted on the rim (53), wherein the weight section (69) is integrally molded with the rim (53).

4. The vehicular cast wheel according to any of claims 1 to 3, **characterized in that** a radius (R1) of the bottom surface (64c) is larger or equal to a radius (R4) of an outer surface (51a) of a detecting device main body (51) of the tire air pressure detecting device (40).

5. The vehicular cast wheel according to claim 4, **characterized by** further comprising a tire valve (52) mounted on the detecting device main body (51).

## Patentansprüche

1. Fahrzeuggussrad, umfassend einen Luftdrucksensor (41, 42) einer Fahrzeugreifenluftdruck-Erfassungsvorrichtung (40),
wobei der Luftdrucksensor (41, 42) auf einer Felge (53) des Rads (25, 31) angebracht ist,
wobei ein abfallender Felgenabschnitt (64), der in Form eines Rings eingebeult ist und eine Bodenfläche (64c) aufweist, auf einer Innenseite von Wulstsitzabschnitten (62) der Felge (53) zum Halten von Wulstabschnitten des Reifens (26, 32) bereitgestellt ist, und
wobei der abfallende Felgenabschnitt (64) mit einem Ausnehmungsabschnitt (54) versehen ist, und
wobei der Luftdrucksensor (41, 42) in dem Ausnehmungsabschnitt (54) untergebracht ist,
**dadurch gekennzeichnet, dass**
der Ausnehmungsabschnitt (54) in der Bodenfläche (64c) bereitgestellt ist und in einer Breitenrichtung und einer Umfangsrichtung derart ausgenommen ist, dass es verhindert ist, dass sich die Wulstabschnitte des Reifens (26, 32) und der Luftdrucksensor (41, 42) stören.

2. Fahrzeuggussrad nach Anspruch 1, **dadurch gekennzeichnet, dass** der Luftdrucksensor (41, 42) in einer Form einer Krümmung entlang einer inneren Seitenfläche (53a) der Felge (53) ausgebildet ist.

3. Fahrzeuggussrad nach Anspruch 1 oder 2, **dadurch gekennzeichnet, dass** ein Gewichtsabschnitt (69) an einer Position vorgesehen ist, welche um einen Winkel von 180° in einer Umfangsrichtung von einer Position verschoben ist, an der der Luftdrucksensor (41, 42) an der Felge (53) angebracht ist, um im Gleichgewicht mit dem Luftdrucksensor (41, 42) zu sein, wobei der Gewichtsabschnitt (69) integral mit der Felge (53) ausgebildet ist.

4. Fahrzeuggussrad nach einem der Ansprüche 1 bis 3, **dadurch gekennzeichnet, dass** ein Radius (R1) der Bodenfläche (64c) größer oder gleich ist als ein Radius (R4) einer äußeren Fläche (51a) eines Erfassungsvorrichtungshauptkörpers (51) der Reifenluftdruck-Erfassungsvorrichtung (40).

5. Fahrzeuggussrad nach Anspruch 4, **dadurch gekennzeichnet, dass** es femer ein Reifenventil (52) umfasst, das am Erfassungsvorrichtungs-Hauptkörper (51) angebracht ist.

## Revendications

1. Roue de véhicule moulée comprenant un capteur de pression d'air (41, 42) d'un appareil de détection de pression d'air sur pneu de véhicule (40), le capteur de pression d'air (41, 42) étant monté sur une jante (53) de la roue (25, 31), dans laquelle une section évolutive de jante (64) bosselée en forme d'anneau et ayant une surface de fond (64c), est prévue sur un côté intérieur de sections de retenue de talon (62) de la jante (53) pour tenir les sections de retenue de talon du pneu (26, 32) et dans laquelle la section évolutive de jante (64) est prévue avec une section évidée (54) et le capteur de pression d'air (41, 42) est logé dans la section évidée (54), **caractérisé en ce que**
la section évidée (54) est prévue dans la surface de fond (64c) et est évidée dans un sens de largeur et périphérique, de manière à empêcher les sections de talon du pneu (26, 32) d'interférer avec le capteur de pression d'air (41, 42).

2. Roue moulée de véhicule selon la revendication 1, **caractérisée en ce que** le capteur de pression d'air (41, 42) est formé en forme d'une courbe le long d'une surface latérale intérieure (53a) de la jante (53).

3. Roue moulée de véhicule selon la revendication 1 ou la revendication 2, **caractérisée par** une section de contrepoids (69) pour être équilibrée avec le capteur de pression d'air (41, 42) sur une position déplacée à un angle de 180° dans un sens périphérique depuis une position où le capteur de pression d'air (41, 42) est monté sur la jante (53), dans laquelle la section de contrepoids (69) est intégralement moulée avec la jante (53).

4. Roue moulée de véhicule selon l'une quelconque des revendications 1 à 3, **caractérisée en ce qu'**un rayon (R1) de la surface de fond (64c) est supérieur ou égal à un rayon (R4) d'une surface extérieure (51a) du corps principal d'appareil de détection (51) de l'appareil de détection de pression d'air du pneu (40).

5. Roue moulée de véhicule selon la revendication 4, **caractérisée par le fait qu'**elle comprend en outre une valve de chambre à air (52) montée sur le corps principal d'appareil de détection (51).
